# EUROPEAN PATENT SPECIFICATION

(11) **EP 1 394 103 B1**
(45) Date of publication and mention of the grant of the patent: **29.08.2007**
(21) Application number: 02730866.7
(22) Date of filing: 03.06.2002
(51) Int. Cl.: B01J 8/04, B01J 8/06, C01B 3/38, C01B 3/48, H01M 8/06, H01M 8/10

(54) **CYLINDRICAL WATER VAPOR REFORMING UNIT**
ZYLINDERFÖRMIGE WASSERDAMPFREFORMIERUNGSEINHEIT
UNITE DE REFORMAGE A VAPEUR D'EAU CYLINDRIQUE

(30) Priority: 04.06.2001 JP 2001168041; 10.01.2002 JP 2002003156
(43) Date of publication of application: 03.03.2004
(73) Proprietor: Tokyo Gas Company Limited, Tokyo 105-8527 (JP)
(72) Inventor: MIURA, Toshiyasu, Tokyo Gas Co., Ltd., Minato-ku, Tokyo 105-8527 (JP); KOMIYA, Jun, Tokyo Gas Co., Ltd., Minato-ku, Tokyo 105-8527 (JP); FUJIKI, Hiroshi, Tokyo Gas Co., Ltd., Minato-ku, Tokyo 105-8527 (JP); FUJIWARA, Naohiko, Tokyo Gas Co., Ltd., Minato-ku, Tokyo 105-8527 (JP)
(74) Representative: Goddar, Heinz J.
(86) International application number: PCT/JP2002/005414
(87) International publication number: WO 2002/098790

(56) References cited:
- EP-A- 0 922 666
- EP-A- 1 197 261
- EP-A2- 0 199 878
- WO-A1-00/63114
- JP-A- 1 122 902
- JP-A- 1 282 113
- JP-A- 9 278 402
- JP-A- 62 027 489
- JP-A- 2001 146 404
- JP-A- 2002 187 705
- JP-U- 63 069 130
- US-A- 3 144 312
- US-A- 4 678 600
- US-A- 5 164 163
- PATENT ABSTRACTS OF JAPAN vol. 2000, no. 08, 6 October 2000 (2000-10-06) -& JP 2000 128505 A (TOKYO GAS CO LTD; MITSUBISHI HEAVY IND LTD), 9 May 2000 (2000-05-09)
- PATENT ABSTRACTS OF JAPAN vol. 018, no. 588 (C-1271), 10 November 1994 (1994-11-10) -& JP 06 219704 A (TOSHIBA CORP), 9 August 1994 (1994-08-09)
- PATENT ABSTRACTS OF JAPAN vol. 014, no. 024 (C-677), 18 January 1990 (1990-01-18) -& JP 01 264903 A (KOBE STEEL LTD), 23 October 1989 (1989-10-23)

## Description

### TECHNICAL FILED

This invention relates to a cylindrical steam reforming unit for preparing a reformed gas mainly composed of hydrogen by subjecting, to steam reforming, hydrocarbon fuels such as city gas, LPG and the like and more particularly, to a cylindrical steam reforming unit used in Polymer Electrolyte Fuel Cell (PEFC).

### TECHNICAL BACKGROUND

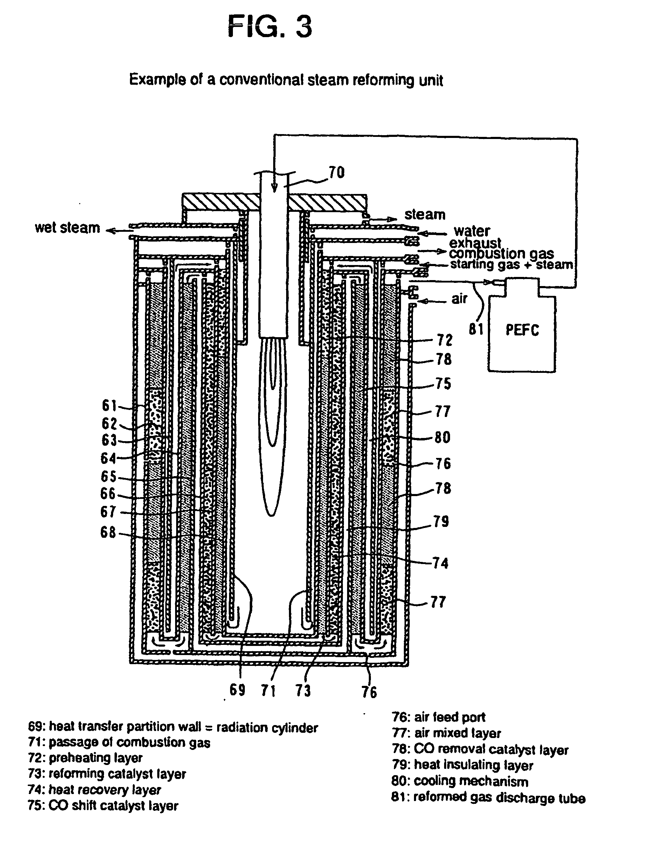

For reforming units of steam reforming a starting gas such as a city gas, LPG, a natural gas or the like, a reforming unit described, for example, in WO 00/63114 is known. This reforming unit is one that is to prepare a reformed gas of high hydrogen concentration mainly used in a polymer electrolyte fuel cell and as shown in Fig. 3, a burner (70) is disposed at the center of a plurality of cylindrical tubular bodies (61 ~ 69) wherein a combustion gas passage (71), a preheating layer (72), a reforming catalyst layer (73), a heat recovery layer (74), a CO shift catalyst layer (75), a CO removal catalyst layer (78) and the like are formed in spaces of the tubular bodies around the burner (70), respectively. However, such a reforming unit has the following problems (1) ~ (3) and has to be further modified.
(1) This reforming unit needs a heat insulation layer (79), a cooling mechanism (80) and the like in the inside thereof and thus, not only the structure becomes complicated, but also the internal thermal performance is low owing to the fact that because the heat insulation layer (79) and the cooling mechanism (80) are, respectively, interposed between these catalyst layers, the respective catalyst layers are separated from one another and are not contiguous, thereby causing the unit to be delayed in temperature rise upon startup and having the startup time prolonged in practice.
(2) Where a Cu-Zn-based CO shift catalyst is used, for example, as a CO shift catalyst, the Cu-Zn-based CO shift catalyst is so low in heat resistance that for continuous use of this catalyst, it is essential to provide the heat insulation layer (79), the cooling mechanism (80) and the like around the CO shift catalyst layer (75) and suppress the temperature of the CO shift catalyst layer (75) to 300°C or below. More particularly, the reforming catalyst layer (73) has a temperature of 700°C or over upon reaction, under which if the heat insulation layer (79) or the cooling mechanism (80) is not provided between the reforming catalyst layer (73) and the CO shift catalyst layer (75), then the temperature of the CO shift catalyst layer (75) is elevated via heat transmission from the reforming catalyst layer (73), resulting in the temperature of the filled CO shift catalyst exceeding its heat-resistant temperature.
(3) Because the usable temperature of the CO shift catalyst layer (75) is limited to 200 ~ 300°C, the reaction velocity caused by the catalyst is so low that a large amount of the CO shift catalyst is required, which renders the unit large in size, thereby increasing the weight correspondingly.

In case where limitation is not placed on such a reform ing unit as set out hereinabove but a reforming unit is employed for fixed type purposes (residential PEFC applications) or for automobiles, it is essential that a reforming system including a reforming unit be small in size and light in weight as a whole. Additionally, various improvements are necessary, make a high efficiency in the practical service conditions, not to mention a startup time upon commencement of operation, or to realize the shortage of the startup time.

EP-A-0 922 666 relates to a cylindrical steam reforming unit comprising a first cylindrical body, a second cylindrical body and a third cylindrical body disposed in concentrically spaced relation and successively increasing in diameters, wherein said first cylindrical body has a bottom plate and said third cylindrical body has a bottom plate. A reforming catalyst layer is formed in a gap partitioned radially by said first cylindrical body and said second cylindrical body for reforming a starting gas, and a preheating layer is disposed upstream of said reforming catalyst layer for preheating the starting gas. A CO removal catalyst layer is disposed downstream of a direction of flow of a reformed gas from said CO shift catalyst layer. Finally, a burner is provided to generate a combustion exhaust gas.

Patent Abstracts of Japan vol. 2000, no. 08, October 6, 2000 & JP 2000 128505 A (Tokyo Gas Co Ltd; Mitsubishi Heavy Ind Ltd), May 9, 2009, Patent Abstracts of Japan vol. 018, no. 5888(C-1271), November 10, 1994 & JP 06 219704 A (Toshiba Corp.), August 9, 1994, and Patent Abstracts of Japan vol. 014, no. 0124 (C-677), January 18, 1990 & JP 01 264903 A (Kobe Steel Ltd), October 23, 1989, disclose cylindrical steam reforming units where the CO shift catalyst layer is formed in a gap with the direction of flow reversed with the reforming catalyst layer at one axial end thereof.

The invention has been accomplished in view of such problems as set forth above with respect to the steam reforming unit and has for its object the provision of a cylindrical steam reforming unit which is small in size and light in weight, has good startup characteristics, can be operated at a high thermal efficiency and is able to stably produce hydrogen.

### DISCLOSURE OF THE INVENTION

The invention is defined in claim 1.

The cylindrical reforming unit of the invention is directed to a cylindrical steam reforming unit, which comprises a plurality of cylindrical bodies consisting of a first cylindrical body, a second cylindrical body and a third cylindrical body of successively increasing diameters disposed in concentric spaced relation, a radiation cylinder disposed within and spaced at a central axis thereof concentrically with the first cylindrical body, a burner disposed at the radial central portion of the radiation cylinder, a reforming catalyst layer with a reforming catalyst filled in a gap radially established between the first and second cylindrical bodies, a CO shift catalyst layer and a CO removal catalyst layer provided in a gap established between the second and third cylindrical bodies provided around the reforming catalyst layer, and the CO shift catalyst layer being formed in a gap with the direction of flow reversed with the reforming catalyst layer at one axial end thereof and through a heat recovery layer of predetermined length.

A heat transfer tube is disposed around the third cylindrical body and water is passed through the heat transfer tube not only to generate steam for reforming, but also to cool the CO shift catalyst layer and the CO removal catalyst layer.

In the practice of the invention, as set forth hereinabove, the CO shift catalyst layer is disposed at the periphery of the reform ing catalyst layer and formed within a space with the direction of flow reversed at one axial end of the reforming catalyst layer. More particularly, the CO shift catalyst layer is formed in a gap established between the second cylindrical and third cylindrical bodies and is so arranged that the gas passage from the reforming catalyst layer is reversed at the lower end of the second cylindrical body and is communicated with the CO shift catalyst layer. In this way, because heat that is greater than the heat of evaporation required in the heat transfer tube can be supplied (i.e. heat supply that is greater than the heat of evaporation required in the heat transfer tube can be received through the heat transfer from the reforming catalyst layer and also through heat transport with the reformed gas generated in the reforming catalyst layer), the CO shift catalyst can be successively raised from the upstream side of the CO shift catalyst layer. Although in the reforming unit set forth in the afore-mentioned WO 00/63114, it is necessary to interpose a heat recovery layer (74) and a heat insulating layer (49) and the like between a reforming catalyst layer and a CO shift catalyst layer, such is not necessary in the present invention.

### BRIEF DESCRIPTION OF THE DRAWINGS

Fig. 1 is a view showing an embodiment of cylindrical reforming unit according to the invention.
Fig. 2 is a view showing an embodiment wherein a monolithic reforming catalyst is used as a reforming catalyst layer of a cylindrical reforming unit.
Fig. 3 is a view showing a conventional cylindrical reforming unit.

### EMBODIMENT CARRYING OUT THE INVENTION

An embodiment of a cylindrical reforming unit according to the invention is successively described.

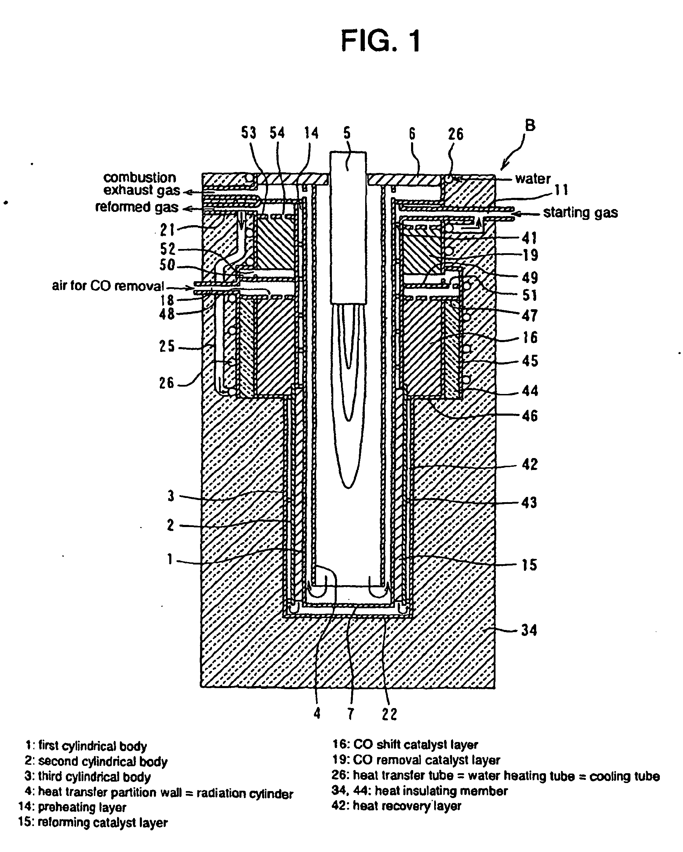

Fig. 1 is a longitudinal sectional view showing an embodiment of a cylindrical reform ing unit according to the invention.

This reforming unit is constituted of a plurality of cylindrical bodies of different diameters disposed about the same central axis in multiple, spaced relation. More particularly, a first cylindrical body (1), a second cylindrical body (2) and a third cylindrical body (3) of successively increasing diameters are concentrically disposed in spaced relation with one another. A cylindrical heat transfer partition wall (4), i.e. a radiation cylinder (4), is disposed in the first cylindrical body (1) as having the same central axis and being smaller in diameter than the first cylindrical body (1). A burner (5) is disposed within the radiation cylinder (4). The burner (5) is attached to the inside of the radiation cylinder (4) through an upper cover- burner mount (6).

The radiation cylinder (4) is disposed in spaced relation between the lower end thereof and a bottom plate (7) of the first cylindrical body (1). This space and a gap associated therewith and established between the radiation cylinder (4) and the first cylindrical body (1) form an exhaust gas passage (8) of a combustion exhaust gas from the burner (5). The exhaust gas passage (8) is communicated, at the upper portion thereof, with an outlet (10) of the combustion exhaust gas through a space between an upper cover (9) of the exhaust gas passage (8) and an upper cover (13) of a preheating layer (14), from which the combustion exhaust gas is discharged.

The preheating layer (14) and a reforming catalyst layer (15) are disposed in the space between the fist cylindrical body (1) and the second cylindrical body (2). The starting gas is fed from a feed port (11) and is introduced into the reforming catalyst layer (15) via the preheating layer (14) and reformed therein. The first cylindrical body (2) is disposed in spaced relation between the lower end thereof and a bottom plate (22) of the third cylindrical body (3).

Air is supplied from an air feed port (18) to the air mixing chamber, and the supplied air is mixed, in the air mixing chamber, with a reforming gas passed through the CO shift catalyst layer (16). The reforming gas passed through the CO removal catalyst layer (19) is withdrawn from an outlet (21) for reform ing gas. The CO removal catalyst layer may also be called PROX layer.

The reform ing unit is provided, at the side surface thereof, with a feed port (11) for starting gas, air feed port (18) for CO removal and outlet (21) for reformed gas as set out hereinabove.

The preheating layer (14) is packed with a filler of a given shape such as alumina balls, a mesh-shaped metal or the like. This permits the starting gas and steam (or steam and water) passing through the preheating layer (14) to be efficiently heated. The flow rate is accelerated by the action of the filler being packed, so that the pulsation of the two-phase stream of the starting gas and steam and water can be prevented.

The reforming catalyst layer (15) is packed with a catalyst for reforming a starting gas with steam, and is communicated at the lower portion thereof with the lower end of the CO shift catalyst layer (16) through a space formed between a bottom plate (7) of the first cylindrical body (1) and the bottom plate (22) of the third cylindrical body (3). More particularly, the space forms a passage of a reformed gas produced in the reforming catalyst layer (15). For the reforming catalyst, any type of catalyst that is able to reform a starting gas with steam is usable without any limitation. For instance, a Ni or Ru-based metal catalyst is used. These metal catalysts are so arranged that a metal catalyst such as NI or Ru is supported on a carrier such as alumina. With methane gas used, for example, as a starting gas, the gas is reformed according to the following reaction (I) in the reforming catalyst layer (15)

CH₄ + H₂O → CO + 3H₂ (I)

The reforming reaction in the reforming catalyst layer is an endothermic reaction and proceeds by absorption of the heat of combustion of the burner (5). More particularly, when the combustion exhaust gas from the burner (5) passes through the exhaust gas passage (8) established between the heat transfer partition wall (4) and the reforming catalyst layer (15), the heat of the combustion exhaust gas is absorbed with the reforming catalyst layer (15), whereupon the reforming reaction is carried out.

A monolithic reforming catalyst may be used, aside from a granular reforming catalyst, as the reforming catalyst in the reforming catalyst layer (15). The reforming catalyst is used at a temperature as high as about 700°C. If the reforming unit is used, for example, in a domestic co-generation system (co-generator system), it is necessary to carry out starting up and stopping operations frequently. Where a granular reforming catalyst is used, a problem arises in that the catalyst packed in the reforming catalyst layer is crushed and broken into pieces by repetition of temperature rise and fall, so that the catalytic activity lowers. To avoid this, a monolithic reforming catalyst is used as a reforming catalyst so that the problem, which will be encountered when a granular reforming catalyst is used, can be solved.

The monolithic reforming catalyst (= honeycomb-shaped reforming catalyst) is one wherein a catalyst and a fixed bed are integrally formed, i.e. a metal catalyst such as Ni or Ru is supported on the inner surfaces of cells of a ceramic carrier or metal carrier having a great number of parallel through-holes, or cells. The monolithic catalyst can withstand vibrations or high-temperature environments and are in frequent use, mainly, as an exhaust gas purification catalyst for motor vehicle

In the practice of the invention, the monolithic reforming catalyst is disposed singly or plurally in the reforming catalyst layer (15) for use as a reform ing catalyst as a whole. This is true of not only the first cylindrical reforming unit, but also the second cylindrical reforming unit described hereinafter.

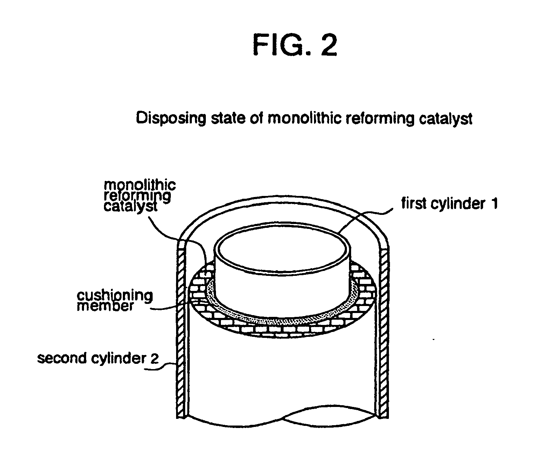

Fig. 2 is a view showing an embodiment where a monolithic catalyst is disposed. This monolithic catalyst is placed in the reforming catalyst layer (15) established between the first cylindrical body (1) and the second cylindrical body (2). Where the monolithic reforming catalyst is used, the catalyst does not settle down when suffering thermal displacement such as by expansion and contraction of the first cylindrical body (1), so that the settlement and division into pieces of the granules of catalyst as will be caused with the case of a granular reforming catalyst can be suppressed. Mention is made of cordierite as an example of a ceramic material constituting the carrier of the monolithic reforming catalyst. Examples of the metal constituting the carrier include stainless steels.

If a cushioning material capable of absorbing the thermal displacement is placed between the monolithic reforming catalyst and the first cylindrical body (1), the thermal displacement on the monolithic catalyst can be further suppressed. A wire mesh may be used as the cushioning material. The use of a metal having good heat transferability as a mesh material is convenient as not lowering heat transferability. In the CO shift catalyst layer (16), the following CO shift reaction, i.e. the water gas shift reaction (II), is carried out wherein CO present in a reforming gas is converted into carbon dioxide along with the generation of hydrogen.

CO + H₂O → CO₂ + H₂ (II)

For the CO shift catalyst in the CO shift catalyst layer (16), a catalyst mainly composed of platinum is used. The catalyst mainly composed of platinum is constituted by supporting platinum on a carrier such as alumina or the like. The catalyst mainly composed of platinum is unlikely to undergo degradation such as by oxidation and can be continuously employed within a high temperature range of 350°C or over, especially within a high temperature range of 400°C or over, thereby permitting the reaction to proceed at a higher rate. In this case, mere application of a platinum-based catalyst to the CO shift reaction may cause a side reaction called methanation reaction (III) indicated below in a high temperature range, thereby im peding the intended CO shift reaction

CO + 3H₂ → CH₄ +H₂O (III)

To avoid this, for the CO shift catalyst in the CO shift catalyst layer (16), a catalyst, which is composed of a major component of platinum along with a metal oxide such as CeO₂ or the like used as an minor component, is used. This permits the methanation reaction to be suppressed from occurring in a high temperature range. For the CO shift catalyst containing platinum as a major component and a metal oxide as a minor component, a CO shift catalyst called "AD catalyst" available from Matsushita Electric Industrial Co., Ltd., is known.

Moreover, Fe/Cr-based high temperature CO shift catalysts may also be used as the CO shift catalyst. In addition, high temperature CO shift catalysts where base metals such as Al, Cu, Fe, Cr, Mo and the like are supported on a carrier such as of Zr may also be used. It will be noted that the high temperature CO shift catalyst may be used in combination with a low temperature CO shift catalyst.

The CO removal catalyst layer (19) is filled with a CO removal catalyst (= PROX catalyst), and CO removal reaction is carried out by means of the PROX catalyst to an extent that the content of CO is reduced to ppm order. For the CO removal catalyst, any type of catalyst capable of selectively oxidizing CO in a reforming gas can be used without limitation and for example, a Ru-based metal catalyst is used. The metal catalyst is constituted, for example, by supporting a metal catalyst such as Ru on a carrier such as alumina. The reaction in the CO removal catalyst layer (19) proceeds according to the following formula (IV).

2CO + O₂ → 2CO₂ (IV)

The reforming gas from which CO has been removed in the CO removal catalyst layer (19) is withdrawn from a withdrawal port (21) of reformed gas.

The withdrawal port (21) of reforming gas is connected to a fuel gas feed tube which is in turn connected, for example, to a polymer electrolyte fuel cell (PEFC, not shown). In this case, the reformed gas containing a predetermined concentration of hydrogen is supplied to a fuel electrode side of a polymer electrolyte fuel cell and is used as a fuel for power generation. The offgas from the fuel electrode of the polymer electrolyte fuel cell may be used as a fuel gas for combustion with the burner (5).

For the heat insulating material (34), heat insulating materials having a good heat insulating effect such as, for example, microtherm, calcium silicate, alumina fibers and the like are employed.

Next, the operations of this reforming unit, i.e. startup operation and steady operation, are now illustrated.

### <Startup Operation>

Water for reforming is supplied and the burner (5) is ignited to heat the inside of the reform ing unit. The burner (5) is able to heat the heat transfer partition wall (4) by application of heat of radiation from the flame, and the combustion exhaust gas passes through the passage (8) between the heat transfer partition wall (4) and the first cylindrical body (1). In this way, the reforming catalyst layer (15) and the preheating layer (14) are, respectively, heated. The combustion exhaust gas is discharged from an outlet (10).

The starting gas effectively absorbs the heat of combustion at the burner (5) with the aid of the heat transfer promoting effect of a filler packed in the preheating layer (14) and is thus heated to a given temperature necessary for the reform ing reaction, followed by passing into the reform ing catalyst layer (15) where the gas is reformed. When the reforming reaction in the reforming catalyst layer (15) comes close to equilibrium, the resulting reformed gas runs out from the lower portion of the reforming catalyst layer (15) and is turned up at the lower end thereof.

The CO shift reaction in the CO shift catalyst layer is an exothermic reaction, and the reaction commences from about 200°C, like a Cu-Zn-based catalyst. After removal of CO by the CO removal reaction in the CO removal catalyst layer (19), the reformed gas is withdrawn from the withdrawal port (21) through a multitude of holes (33) provided along the periphery of the partition board (32).

In this manner, the reforming unit is provided with the CO shift catalyst layer (16) and the CO removal catalyst layer (19) around the reforming catalyst layer (15) without interposing a heating insulating layer, a cooling mechanism and the like. Thus, the heat of combustion of the burner (5) is able to raise the temperatures of the CO shift catalyst layer (16) and the CO removal catalyst layer (19) within a relatively short time and contributes to generation of required steam. The combustion exhaust gas from the burner (5) runs and passes between the heat transfer partition wall (4) and the first cylindrical body (1), so that heat contained in the combustion exhaust gas can be effectively absorbed, resulting in fuel saving in the course of startup operation. In other words, according to the reforming unit, the unit can be raised to a temperature necessary for startup operation within a short time, a fuel can be saved, and a very quick startup operation can be perform ed.

### <Steady Operation>

In the CO removal catalyst layer (19), CO in the reformed gas is selectively oxidized. The reformed gas obtained after removal of CO through the oxidation reaction of CO in the CO removal catalyst layer (19) becomes a gas which contains, for example, 75% of hydrogen, 2% of methane, 20% of carbon dioxide, 3% of nitrogen and not larger than 10 ppm of carbon monoxide, and is withdrawn from the withdrawal port (21). The reformed gas has a carbon monoxide concentration of 10 ppm or below and can be used, for example, as a fuel for polymer electrolyte fuel cell.

In the reforming unit, a heat transfer tube (26) serving also as a feed water preheater is wound around the upper cover- burner mount (6) for holding the burner (5) as coming substantially to full circle. The heat transfer tube (26) substantially makes the circuit of the periphery of the upper cover-burner mount (6) and arrives via a connection tube (25) at a lower end of a heat-insulating member (44) described hereinafter, and is connected to a starting gas feed tube (11) while spirally ascending the periphery thereof. The reforming unit is so arranged with respect to the preheating layer (14) that the preheating layer (14) is provided at an upper portion between the first cylindrical body and the second cylindrical body and the reform ing catalyst layer (15) is provided at a lower portion contiguous to the upper portion. A round bar (41) is spirally-disposed inside the preheating layer (14), so that one continuous spiral passage is established within the preheating layer (14).

Further, a heat recovery layer (42), a CO shift catalyst layer (16) [= shift layer (16)] and a CO removal catalyst layer (19) are, respectively, disposed at the downstream side of the reforming catalyst layer (15), i.e. between the second cylindrical body (2) and the third cylindrical body (3). The heat recovery layer (42) has a plurality of round bars (43) spirally disposed therein. The inner space of the heat recovery layer (42) is spirally divided off by means of the plural round bars (43), thereby establishing a plurality of spiral passages therein. The length of the spiral passage in the heat recover layer (42) is one which is sufficient to render the temperature of the reformed gas flowing into the CO shift catalyst layer (16) not higher than the heat-resistant temperature of a CO shift catalyst.

Although the catalyst packed in the CO shift catalyst layer (16) may be a conventional one (i.e. a Cu/Zn-based low temperature CO shift catalyst or the like), the use of a catalyst which can be used continuously at least at 350°C or over (i.e. a platinum-based or Fe/Cr-based high temperature CO shift catalyst or the like) enables one to shorten the length of the heat recovery layer (42) and the CO shift catalyst layer (16) and make these layers small in size, thereby realizing a small-sized, light-weight reforming unit as a whole.

The CO shift catalyst layer (16) is provided between the second cylindrical body (2) and the third cylindrical body (3) and is disposed with the heat insulating member (44) therearound. The heat insulating member (44) is wound therearound with the heat transfer tube (26) via a circular cylindrical body constituted of a thin sheet (45). More particularly, the heat insulating member (44) is disposed between the third cylindrical body (3) and the circular cylindrical body made of the thin sheet (45) and serves as a cooling mechanism for indirectly cooling the CO shift catalyst layer (16) by means of the heat transfer tube (26). For the insulating member, those having good processability, such as ceramic fibers, are used. The heat insulating member such as ceramic fibers is wound in a thickness which allows the temperature of the CO shift catalyst layer (16) to be uniformly kept at an appropriate level without lowering in excess by the cooling action of the heat transfer tube (26). The heat transfer tube (26) [including the heat transfer tube (26) serving as the feed water preheater] has the function as a boiler and establishes one continuous passage, with no local stagnation as will occur in plural passages.

The CO shift catalyst layer (16) is partitioned at lower and upper portions thereof with a partition board (46) and a partition board (47), and the partition board (47) is formed with a plurality of holes (48) at equal intervals along the circumferential direction. A partition board (49) is also disposed above the partition board (47) at a given space therebetween, and air for CO removal is supplied via the feed tube (18) to the space between both partition boards. A circular passage (50) is disposed above the partition board (49), and the space between the partition board (47) and the partition board (49) and the passage (50) are mutually communicated through a hole (51) of a given diameter. When the hole (51) is provided as having the given diameter and being one in number, a predetermined passage rate is obtained upon passage of the reformed gas and the air for CO removal, under which the reformed gas and the air for CO removal can be well mixed through the turbulent flow in the course of the passage.

The passage (50) is communicated with the CO removal catalyst layer (19) through a plurality of holes (52) uniformly disposed along the circumference of the unit. The CO removal catalyst layer (19) is in communication with the withdrawal port (11) of reformed gas through a plurality of holes (54) uniformly formed along the periphery of the partition board (53) serving as an upper cover thereof. The CO removal catalyst layer (19) is surrounded with the third cylindrical body and is directly, spirally wound therearound with the cooling tube (26), i.e. the heat transfer tube (26).

The heat recovery layer (42) is disposed upstream of the CO shift catalyst layer (16), which makes it possible to lower the temperature of the reformed gas flowing into the CO shift catalyst layer (16) to a given level. For instance, when a city gas (13A) is used for operation at a low steam ratio of S/C = 3.5 or below, the temperature of the reformed gas from the reforming catalyst layer (15) is at about 700°C. In such case, the reformed gas can be passed into the CO shift catalyst layer (16) through the heat recovery layer (42), so that the temperature can be lowered to 600°C or below, which does not exceed the heat-resistant temperature of the CO shift catalyst layer. The temperature of the reformed gas can be made not higher than the heat-resistant temperature of the CO shift catalyst by means of the heat recovery layer (42), and the reforming temperature in the reforming catalyst layer (15) can be raised. In this way, a starting gas, i.e. a hydrocarbon gas of C1 to C3 or C4 can be reformed satisfactorily.

Furthermore, CO shift catalyst such as a Cu/Zn-based low temperature CO shift catalyst mainly composed of base metals, an Fe/Cr-based high temperature CO shift catalyst or the like may be used. Although Cr has toxicity and needs costs for waste disposal, a high temperature CO shift catalyst wherein Cr is replaced by Al is easy in disposal with an environmental burden being small. A CO shift catalyst composed mainly of Cu and Al exhibits activity higher than the Fe/Cr-based one and may be used for this purpose. It is known that the Cu/Zn-based low temperature CO shift catalyst is degraded by oxidation. Low temperature CO shift catalysts using base metals other than Cu/Zn are reported as having a high oxidation resistance, and such catalysts may be used.

When two or more of such base metal-based CO shift catalysts may be appropriately used, continuous use within a range of 200°C to 600°C is possible. Accordingly, a side reaction called methanation reaction can be suppressed from occurring and CO shift catalysts having a good oxidation resistance can be realized.

### Effect of The Invention

According to the cylindrical steam reforming units of the invention, the following effects are obtained.
① A CO shift catalyst layer and a CO removal catalyst layer (= PROX layer) are, respectively, disposed directly on the outer periphery of a reforming catalyst layer without formation of any heat insulating layer and the like, so that the reforming unit itself can be made small in size. Because heat from a burner readily transmits to the CO shift catalyst layer and the CO removal catalyst layer, the startup time can be rem arkably shortened.
② The provision of a heat transfer tube for vaporizing water for reforming around the CO shift catalyst layer and the CO removal catalyst layer contributes to keeping the CO shift catalyst layer and the CO removal catalyst layer at given temperatures, respectively, and a thermal efficiency of the reforming unit can be improved through heat recovery of the heat transfer tube.
③ When the flow rate of a liquid phase of a cooling medium (water and steam) within the heat transfer tube is set at 0.1 m/second or over, pulsation can be prevented, permitting the cooling medium of two-phase steams to be smoothly passed.
④ The heat recovery layer is provided upstream of the CO shift catalyst layer, so that a CO shift catalyst of a relatively low heat-resistant temperature can be used without resorting to any specific type of catalyst. In this sense, the cost of catalyst can be reduced.
⑤ The provision of the heat transfer tube around the CO shift catalyst layer through a heat insulating member can prevent overcooling of the CO shift catalyst layer to keep and contributes to keeping an appropriate temperature, and allows a uniform temperature without a temperature difference to be kept. This permits the heat of a combustion exhaust gas and a reformed gas to be efficiently absorbed, thereby improving a thermal efficiency by use of a simple structure.
⑥ Air can be well mixed in the CO removal catalyst layer, so that CO can be stably reduced. Bar members partitioning passages of the preheating layer are spirally disposed and a filler such as alumina balls is packed, so that pulsation with a two-phase stream of water and steam can be prevented. Because a starting gas and steam can be well mixed, stable preparation of the reformed gas becomes possible.
⑦ Because the concentration of carbon monoxide in the resulting reformed gas can be reduced to a predetermined level or below, the unit can be used as a hydrogen generator of a polymer electrolyte fuel cell. In this case, as set out in ① above, the reforming unit per se can be made small in size, thereby enabling one to constitute a small-sized fuel cell system of high efficiency.

## Claims

1. A cylindrical steam reforming unit comprising:
(a) a first cylindrical body (1), a second cylindrical body (2) and a third cylindrical body (3) disposed in concentrically spaced relation and successively increasing in diameters, wherein said first cylindrical body (1) has a bottom plate (7), and said third cylindrical body (3) has a bottom plate (22);
(b) a radiation cylinder (4) disposed inside said first cylindrical body (1) in spaced relation with and having a central axis defined concentrically with said first cylindrical body (1);
(c) a burner (5) disposed at a radial central portion of said radiation cylinder (4);
(d) a reforming catalyst layer (15) formed in a gap partitioned radially by said first cylindrical body (1) and said second cylindrical body (2) for reforming a starting gas, and a preheating layer (14) disposed upstream of said reforming catalyst layer (15) for preheating the starting gas;
(e) a heat recovery layer (42) formed in a gap between said second cylindrical body (2) and said third cylindrical body (3), said gap being communicating with the gap where the reforming catalyst layer (15) is formed;
(f) a CO shift catalyst layer (16) disposed in the gap communicating with said heat recovery layer (42) formed in a gap between said second cylindrical body (2) and said third cylindrical body (3);
(g) a CO removal catalyst layer (19) disposed downstream of a direction of flow of a reformed gas from said CO shift catalyst layer (16);
(h) wherein a direction of flow of a combustion exhaust gas between a radiation cylinder (4) and said first cylindrical body (1) is reverse to the direction of flow in said burner (5) and is opposite to the direction of flow of the starting gas flowing through said reforming catalyst layer (15);
(i) said preheating layer (14) positioned upstream of said reforming catalyst layer (15) is positioned at an outer periphery of said radiation cylinder (4), and said CO shift catalyst layer (16) is positioned at an outer periphery of said preheating layer (14);
(j) the direction of flow of the reformed gas in the heat recovery layer (42) is reversed to the direction of flow in said reforming catalyst layer (15).

2. The cylindrical steam reforming unit according to claim 1, wherein one continuous round bar (41) is spirally disposed in the gap inside said preheating layer (14), thereby forming a spiral passage.

3. The cylindrical steam reforming unit according to claim 1, wherein a plurality of continuous round bars (43) are spirally disposed in the gap inside said heat recovery layer (42), thereby forming a spiral passage, and a length of said spiral passage is sufficient to render the temperature of the reformed gas flowing into the CO shift catalyst layer (16) not higher than the heat-resistant temperature of a CO shift catalyst.

4. The cylindrical steam reforming unit according to claim 1, wherein said CO shift catalyst in said CO shift catalyst layer (16) is one which is usable continuously at least at a temperature of 350 °C.

5. The cylindrical steam reforming unit according to claim 1, wherein in said CO shift catalyst layer (16), a high temperature CO shift catalyst is disposed at the side of said reforming catalyst layer (15) and a low temperature CO shift catalyst is disposed at the side of said CO removal catalyst layer (19).

6. The cylindrical steam reforming unit according to claim 1, wherein said CO shift catalyst layer (16) is filled with a CO shift catalyst in a full amount sufficient to be used in an ordinary operation condition.

7. The cylindrical steam reforming unit according to claim 1, wherein a heat transfer tube (26) for the passage of water used for reforming reaction in said reforming catalyst layer (15) and for cooling said CO shift catalyst layer (16) is constituted while being spirally wound around an outer wall of said CO shift catalyst layer (16).

8. The cylindrical steam reforming unit according to claim 1, wherein heat insulating member layer (44) is provided around the outer wall of said CO shift catalyst layer (16), and a heat transfer tube (26) for the passage of water used for preforming reaction and for cooling said CO shift catalyst layer (16) is constituted while being spirally wound around an outer periphery of said heat insulating member layer (44).

9. The cylindrical steam reforming unit according to claim 1, wherein a feed water preheating unit for performing a heat exchange with a combustion exhaust gas upstream of said heat transfer tube (26) to preheat water introduced into said reforming catalyst layer (15) is provided.

10. The cylindrical steam reforming unit according to claim 9, wherein said feed water preheating unit is formed by winding said heat transfer tube (26) around an outer face of said reforming unit in the vicinity of a combustion exhaust gas outlet from which a combustion exhaust gas passes out.

## Patentansprüche

1. Zylindrische Dampfreformierungseinheit, mit:
(a) einem ersten zylindrischen Körper (1), einem zweiten zylindrischen Körper (2) und einem dritten zylindrischen Körper (3), die in konzentrisch beabstandeter Lagebeziehung angeordnet sind und aufeinanderfolgend im Durchmesser anwachsen, wobei der erste zylindrische Körper (1) eine Bodenplatte (7) hat und der dritte zylindrische Körper (3) eine Bodenplatte (22) hat;
(b) einem Strahlungszylinder (4), der innerhalb des ersten zylindrischen Körpers (1) in beabstandeter Lagebeziehung mit diesem und mit einer Mittelachse, die konzentrisch zu dem ersten zylindrischen Körper (1) definiert ist, angeordnet ist;
(c) einem Brenner (5), der in einem radial mittigen Teil des Strahlungszylinders (4) angeordnet ist;
(d) einer Reformierungskatalysatorschicht (15), die in einem Spalt gebildet ist, der radial durch den ersten zylindrischen Körper (1) und den zweiten zylindrischen Körper (2) zum Reformieren eines Startgases geteilt ist, und einer Vorheizschicht (14), die stromabwärts der Refomierungskatalysatorschicht (15) zum Vorheizen des Startgases angeordnet ist;
(e) einer Wärmewiedergewinnungsschicht (42), die in einem Spalt zwischen dem zweiten zylindrischen Körper (2) und dem dritten zylindrischen Körper (3) gebildet ist, wobei der Spalt mit dem Spalt kommuniziert, in dem die Refomierungskatalysatorschicht (15) gebildet ist;
(f) einer CO-Verschiebungskatalysatorschicht (16), die in dem Spalt angeordnet ist, welcher mit der Wärmewiedergewinnungsschicht (42) kommuniziert, die in einem Spalt zwischen dem zweiten zylindrischen Körper (2) und dem dritten zylindrischen Körper (3) gebildet ist;
(g) einer CO-Beseitigungskatalysatorschicht (19), die stromabwärts in einer Strömungsrichtung eines reformierten Gases von der CO-Verschiebungskatalysatorschicht (16) angeordnet ist;
(h) wobei eine Strömungsrichtung eines Verbrennungsauspuffgases zwischen einem Strahlungszylinder (4) und dem ersten zylindrischen Körper (1) umgekehrt zu der Strömungsrichtung in dem Brenner (5) ist und entgegengesetzt der Strömungsrichtung des Startgases ist, welches durch die Reformierungskatalysatorschicht (15) strömt;
(i) wobei die Vorheizschicht (14), die stromaufwärts der Reformierungskatalysatorschicht (15) angeordnet ist, an einem Außenumfang des Strahlungszylinders (4) angeordnet ist, und die CO-Verschiebungskatalysatorschicht (16) an einem Außenumfang der Vorheizschicht (14) angeordnet ist;
(j) wobei die Strömungsrichtung des reformierten Gases in der Wärmewiedergewinnungsschicht (42) in bezug auf die Strömungsrichtung in der Reformierungskatalysatorschicht (15) umgekehrt ist.

2. Zylindrische Dampfreformierungseinheit nach Anspruch 1, bei der ein kontinuierlicher Rundstahl (41) spiralig in dem Spalt innerhalb der Vorheizschicht (14) angeordnet ist, so daß ein spiraliger Durchlaß gebildet wird.

3. Zylindrische Dampfreformierungseinheit nach Anspruch 1, bei der eine Vielzahl kontinuierlicher runder Stangen (43) spiralig in dem Spalt innerhalb der Wärmewiedergewinnungsschicht (42) angeordnet ist, so daß ein spiraliger Durchlaß gebildet wird, und eine Länge des spiraligen Durchlasses ausreichend ist, die Temperatur des reformierten Gases, welches in die CO-Verschiebungskatalysatorschicht (16) strömt, nicht höher werden zu lassen als die Wärmewiderstandstemperatur eines CO-Verschiebungskatalysators.

4. Zylindrische Dampfreformierungseinheit nach Anspruch 1, bei der der CO-Verschiebungskatalysator in der CO-Verschiebungskatalysatorschicht (16) einer ist, der kontinuierlich wenigstens bei einer Temperatur von 350°C verwendbar ist.

5. Zylindrische Dampfreformierungseinheit nach Anspruch 1, bei der in der CO-Verschiebungskatalysatorschicht (16) ein Hochtemperatur-CO-Verschiebungskatalysator an der Seite der Reformierungskatalysatorschicht (15) angeordnet ist und ein Niedertemperatur-CO-Verschiebungskatalysator an der Seite der CO-Beseitigungskatalysatorschicht (19) angeordnet ist.

6. Zylindrische Dampfreformierungseinheit nach Anspruch 1, bei der die CO-Verschiebungskatalysatorschicht (16) mit einem CO-Verschiebungskatalysator in einer vollen Menge, die ausreichend ist, daß sie bei einer gewöhnlichen Betriebsbedingung verwendet wird, gefüllt ist.

7. Zylindrische Dampfreformierungseinheit nach Anspruch 1, bei der ein Wärmeübertragungsrohr (26) für den Durchlaß von Wasser, das für die Reformierungsreaktion in der Reformierungskatalysatorschicht (15) und zum Kühlen der CO-Verschiebungskatalysatorschicht (16) verwendet wird, aufgebaut ist, wobei es spiralig um eine Außenwand der CO-Verschiebungskatalysatorschicht (16) gewickelt ist.

8. Zylindrische Dampfreformierungseinheit nach Anspruch 1, bei der eine Schicht (44) eines wärmeisolierenden Elementes um die Außenwand der CO-Verschiebungskatalysatorschicht (16) vorgesehen ist und ein Wärmeübertragungsrohr (26) für den Durchlaß von Wasser, das für die Reformierungsreaktion und zum Kühlen der CO-Verschiebungskatalysatorschicht (16) verwendet wird, aufgebaut ist, indem es spiralig um einen Außenumfang der Schicht (44) des wärmeisolierenden Elementes gewickelt ist.

9. Zylindrische Dampfreformierungseinheit nach Anspruch 1, bei der eine Vorheizeinheit für Zufuhrwasser zum Durchführen eines Wärmeaustauschs mit einem Verbrennungsauspuffgas stromabwärts des Wärmeübertragungsrohrs (26), um Wasser, das in die Reformierungskatalysatorschicht (15) eingeführt wird, vorzuwärmen, vorgesehen ist.

10. Zylindrische Dampfreformierungseinheit nach Anspruch 9, bei der die Vorheizeinheit für Zufuhrwasser durch Wickeln des Wärmeübertragungsrohrs (26) um eine Außenfläche der Reformierungseinheit in der Umgebung eines Verbrennungsauspuffgasauslasses, aus dem ein Verbrennungsauspuffgas ausströmt, gebildet ist.

## Revendications

1. Une unité de reformage cylindrique comprenant :
(a) un premier corps cylindrique (1), un deuxième corps cylindrique (2) et un troisième corps cylindrique (3) disposés en une relation concentriquement non jointive et augmentant successivement en diamètre, où ledit premier corps cylindrique (1) est muni d'une plaque inférieure (7) et ledit troisième corps cylindrique (3) est muni d'une plaque inférieure (22).
(b) un cylindre de radiation (4) disposé à l'intérieur dudit premier corps cylindrique (1) en relation non jointive avec lui et ayant un axe central défini concentriquement avec ledit premier corps cylindrique (1) ;
(c) un brûleur (5) disposé à une portion centrale radiale dudit cylindre de radiation (4) ;
(d) une couche de catalyseur de reformage (15) formée dans un écartement cloisonné radialement par ledit premier corps cylindrique (1) et par ledit deuxième corps cylindrique (2) pour le reformage d'un gaz de départ, et une couche de préchauffage (14) disposée en amont de ladite couche du catalyseur de reformage (15) pour le préchauffage du gaz de départ ;
(e) une couche de récupération de la chaleur (42) formée dans un écartement entre ledit deuxième corps cylindrique (2) et ledit troisième corps cylindrique (3), ledit écartement étant en communication avec l'écartement dans lequel la couche du catalyseur de reformage (15) est formée ;
(f) une couche de catalyseur de décalage du CO (16) disposée dans l'écartement en communication avec ladite couche de récupération de la chaleur (42) formée dans l'écartement entre ledit deuxième corps cylindrique (2) et ledit troisième corps cylindrique (3) ;
(g) Une couche de catalyseur d'élimination du CO (19) disposée en aval de la direction de l'écoulement du gaz reformé de ladite couche du catalyseur de décalage du CO (16) ;
(h) selon laquelle un sens d'écoulement d'un gaz d'échappement de combustion entre un cylindre de radiation (4) et ledit premier corps cylindrique (1) est à contre-courant du sens d'écoulement dans ledit brûleur (5) et est à contre-courant du sens d'écoulement du gaz de départ circulant à travers ladite couche du catalyseur de reformage (15) ;
(i) ladite couche de préchauffage (14) positionnée en amont de ladite couche du catalyseur de reformage (15) est positionnée sur la périphérie extérieure dudit cylindre de radiation (4) et ladite couche du catalyseur de décalage du CO (16) est positionnée sur la périphérie extérieure de ladite couche de préchauffage (14) ;
(j) le sens d'écoulement dudit gaz reformé dans la couche de récupération de la chaleur (42) est à contre-courant du sens d'écoulement dans ladite couche du catalyseur de reformage (15).

2. Unité cylindrique de reformage à la vapeur selon la revendication 1, selon laquelle une barre ronde continue (41) est disposée en spirale dans l'écartement compris à l'intérieur de ladite couche de préchauffage (14), formant ainsi un passage spiralé.

3. Unité cylindrique de reformage à la vapeur selon la revendication 1, selon laquelle une pluralité de barres rondes continues (43) sont disposées en spirale dans l'écartement à l'intérieur de ladite couche de récupération de la chaleur (42), formant ainsi un passage spiralé, et une longueur dudit passage spiralé est suffisante pour rendre la température du gaz reformé s'écoulant dans la couche du catalyseur de décalage du CO (16) pas plus élevée que la température résistante à la chaleur du catalyseur de décalage du CO.

4. Unité cylindrique de reformage à la vapeur selon la revendication 1, selon laquelle ledit catalyseur de décalage du CO dans ladite couche du catalyseur de décalage du CO (16) est un catalyseur qui est continuellement utilisable à une température d'au moins 350°C.

5. Unité cylindrique de reformage à la vapeur selon la revendication 1, selon laquelle dans ladite couche du catalyseur de décalage du CO (16), un catalyseur de décalage du CO utilisé à haute température, est disposé sur le côté de ladite couche du catalyseur de reformage (15) et un catalyseur de décalage du CO utilisé à basse température est disposé sur le côté de ladite couche du catalyseur d'élimination du CO (19).

6. Unité cylindrique de reformage à la vapeur selon la revendication 1, selon laquelle ladite couche du catalyseur de décalage du CO (16) est comblée d'un catalyseur de décalage du CO en quantité complète suffisante pour être utilisée dans une condition d'opération ordinaire.

7. Unité cylindrique de reformage à la vapeur selon la revendication 1, selon laquelle un tube de transfert de la chaleur (26) pour le passage de l'eau utilisée pour la réaction de reformage dans ladite couche du catalyseur de reformage (15) et pour le refroidissement de ladite couche du catalyseur de décalage du CO (16) est constitué tandis qu'il est enroulé en spirale autour de la paroi de cloisonnement externe de ladite couche du catalyseur de décalage du CO (16).

8. Unité cylindrique de reformage à la vapeur selon la revendication 1, selon laquelle la couche de l'organe calorifuge (44) est positionnée autour de la paroi externe de ladite couche du catalyseur de décalage du CO (16) et un tube de transfert de la chaleur (26) pour le passage de l'eau utilisée pour la réaction de reformage et pour le refroidissement de ladite couche du catalyseur de décalage du CO (16) est constitué tandis qu'il est enroulé en spirale autour d'une périphérie externe de ladite couche dudit organe calorifuge (44).

9. Unité cylindrique de reformage à la vapeur selon la revendication 1, selon laquelle une unité de préchauffage de l'eau d'arrivée est fournie pour la réalisation d'un échange de chaleur avec un gaz d'échappement de combustion en amont dudit tube de transfert de la chaleur (26) pour réchauffer l'eau introduite dans ladite couche du catalyseur de reformage (15).

10. Unité cylindrique de reformage à la vapeur selon la revendication 9, selon laquelle ladite unité de préchauffage de l'eau d'arrivée est formée en enroulant ledit tube de transfert de la chaleur (26) autour d'une surface externe de ladite unité de reformage à proximité d'une sortie de gaz d'échappement de combustion à partir duquel sort un gaz d'échappement de combustion.
